# EUROPÄISCHE PATENTSCHRIFT

(11) **EP 2 227 934 B1**
(45) Veröffentlichungstag und Bekanntmachung des Hinweises auf die Patenterteilung: **23.11.2011**
(21) Anmeldenummer: 10401030.1
(22) Anmeldetag: 11.03.2010
(51) Int. Cl.: A01C 15/00

(54) **Landwirtschaftliche Verteilmaschine**
Agricultural spreader
Epandeur agricole

(30) Priorität: 13.03.2009 DE 102009013178
(43) Veröffentlichungstag der Anmeldung: 15.09.2010
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Walter, Achim, 49078 Osnabrück (DE)

(56) Entgegenhaltungen:
- EP-A1- 0 857 409
- WO-A1-98/09890
- DE-A1- 4 309 730
- DE-U1-202008 013 948

## Beschreibung

Die Erfindung betrifft eine landwirtschaftliche Verteilmaschine gemäß des Oberbegriffes des Patentanspruches 1.

Eine derartige Verteilmaschine ist beispielsweise durch die EP 08 57 409 B1 bekannt. Diese Verteilmaschine ist als Düngerstreuer ausgebildet und weist eine Schutzvorrichtung auf. Diese Schutzvorrichtung ist beabstandet zu den von den Wurfschaufeln beschriebenen Umlaufbahnen angeordnet. Durch diese Schutzvorrichtung soll verhindert werden, dass die Streuelemente in ungewünschter Weise berührt werden. Es ist in einer Ausgestaltung vorgesehen, dass die Kupplung der Antriebswelle gelöst wird, wenn die Schutzvorrichtung aus ihrer Schutzposition gebracht wird. Bei dieser bekannten Maschine ist es möglich, wenn die Schutzeinrichtung sich in ihrer Schutzposition befindet, trotzdem noch sich an der sich in dem Vorratsbehälter befindlichen angetriebenen Rühreinrichtung verletzen.

Durch EP 17 67 981 A2 ist ein weiterer Düngerstreuer mit einem Vorratsbehälter und einer Schutzvorrichtung bekannt. Diese Schutzvorrichtung ist innerhalb des Vorratsbehälters angeordnet. Sie befindet sich oberhalb der dem Vorratsbehälter zugeordneten Rühr- und Dosierelemente. Der Schutzeinrichtung ist ein Verriegelungselement zugeordnet, welches nur mit einem zusätzlichen Betätigungselement aus seiner Schutzposition zu bringen ist. Eine Abschaltung der Dosier- und Rührorgane erfolgt hier jedoch nicht, wenn die Schutzvorrichtung aus ihrer Schutzposition gebracht wird.

Eine weitere Vesrteilmaschine mit den Merkmalen des Oberbegriffes des Anspruchs 1 ist durch die DE 43 09 730 bekannt.

Der Erfindung liegt die Aufgabe zugrunde, eine landwirtschaftliche Verteilmaschine vorzuschlagen, bei welcher ein wirksamer Schutz vor Verletzungen durch angetriebene Rühr- und Dosierelemente erreicht wird.

Diese Aufgabe wird erfindungsgemäß dadurch gelöst, dass die dem Vorratsbehälter zugeordnete Schutzeinrichtung mit Mitteln ausgestattet ist, die bei Entfernen der Schutzeinrichtung aus ihrer Schutzposition auf die Antriebsvorrichtung derart einwirken, dass die Rühr- und/oder Dosierelemente durch Trennen, vorzugsweise durch Trennmittel von der Antriebsvorrichtung stillsetzbar sind. Infolge dieser Maßnahmen werden beim Entfernen der Schutzvorrichtung aus ihrer Schutzposition die Antriebsvorrichtungen der Rühr- und Dosierelemente sicher abgeschaltet. Hierdurch werden sicher Verletzungen durch die Dosier- und Rührvorrichtung, die im Vorratsbehälter zugeordnet ist, verhindert.

Um diese Abschaltung sicher zu gewährleisten, ist vorgesehen, dass die Mittel eine der Antriebsvorrichtung zugeordnete Kupplungsvorrichtung aufweisen.

In einer bevorzugten Ausführungsform ist vorgesehen, dass die Mittel als elektrischer Sensor und/oder Schalter ausgebildet sind, dass der Sensor und/oder Schalter mit der Kupplungsvorrichtung über Übertragungsmittel verbunden ist.

Es ist jedoch auch möglich, den erfindungsgemäßen Schutz dadurch zu erreichen, dass die Mittel als mechanische Übertragungsmittel, die auf die Kupplungsvorrichtung bei Entfernen der Schutzvorrichtung aus der Schutzposition einwirken, ausgebildet sind.

Weitere Einzelheiten der Erfindung sind der Beispielsbeschreibung und den Zeichnungen zu entnehmen. Hierbei zeigen
- Fig. 1: die als Schleuderdüngerstreuer ausgebildete Verteilmaschine mit sich in Schließstellung befindlicher Schutzeinrichtung in perspektivischer Ansicht schräg von vorne oben und in Teildarstellung,
- Fig. 2: den Abschaltbereich für die Rühreinrichtung bei geschlossener Schutzeinrichtung in vergrößertem Maßstab und Teildarstellung nach der Darstellungsweise gemäß Fig. 1,
- Fig. 3: die als Schleuderdüngerstreuer ausgebildete Verteilmaschine in perspektivischer Ansicht schräg von vorne oben in Teildarstellung, wobei die in Fahrtrichtung rechte Schutzeinrichtung innerhalb des Vorratsbehälters sich in Öffnungsstellung befindet und
- Fig. 4: den Abschaltbereich für die Rühreinrichtung bei geöffneter rechter Schutzeinrichtung in vergrößertem Maßstab und Teilansicht nach der Darstellungsweise gemäß Fig. 3.

Die landwirtschaftliche Verteilmaschine ist als Schleuderdüngerstreuer ausgebildet. Sie weist einen Vorratsbehälter 1 auf, der durch ein dachförmiges Miteilteil 2 in zwei trichterförmige Auslaufbereiche 3 aufgeteilt ist. Die trichterförmigen Auslaufbereiche 3 werden durch Dosierelemente abgeschlossen. Unterhalb der Dosierelemente 4 befinden sich rotierend angetriebene Schleuderscheiben 5 mit Wurfschaufeln 6. Im unteren Bereich der Auslauftrichter 3 befindet sich oberhalb der Dosiereinrichtung 4 eine in die Auslauftrichter 3 hineinragende, drehbar gelagerte Rührwelle 7 mit Rührelementen 8. Um die Anordnung der Rührwelle 7 und die darauf angeordneten Rührelemente 8 besser erkennen und darstellen zu können, ist die Vorderwand des Vorratsbehälters 1 nicht dargestellt. Die Rührwelle 7 wird von einer nicht dargestellten motorischen Antriebsvorrichtung über eine Antriebsverbindung 9 angetrieben. Die Antriebsverbindung 9 wird über Kupplungselemente 10 mit der Rührwelle 7 gekoppelt, um die Rührwelle 7 in Rotation versetzen zu können.

Über die Dosierorgane 4 wird das sich im Vorratsbehälter 1 befindliche Material den Schleuderscheiben 5 zugeführt, über welche es von den Wurfschaufeln 6 in Breitverteilung auf der Bodenoberfläche verteilt wird.

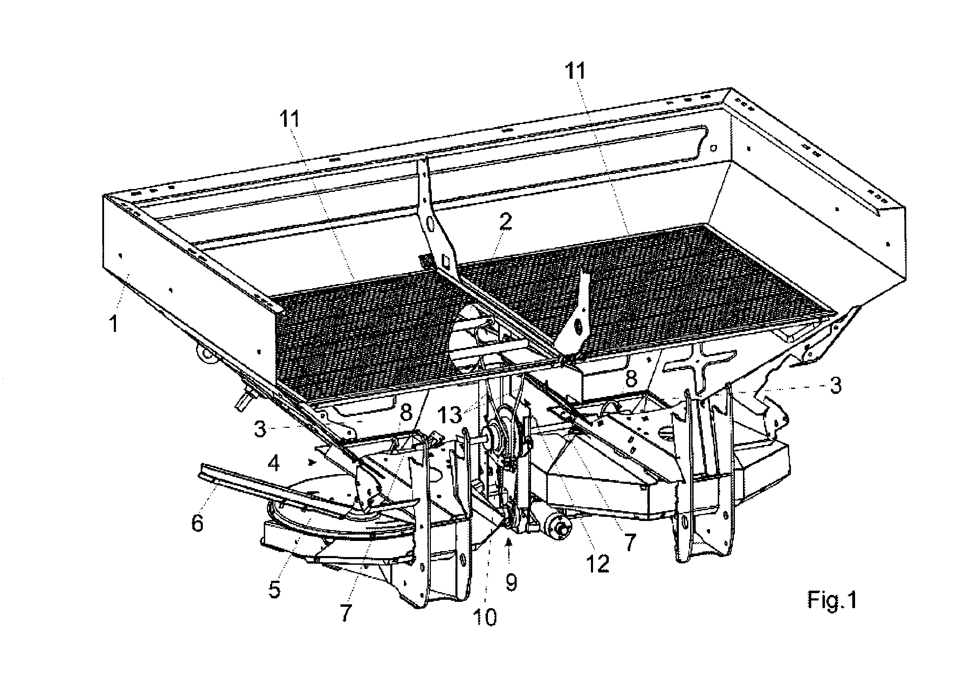

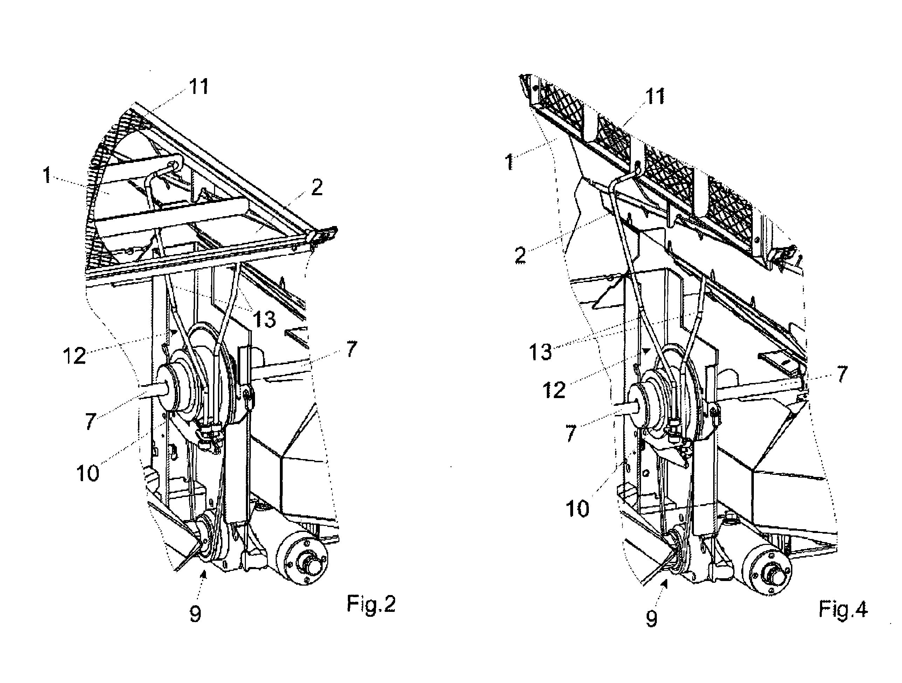

Innerhalb des Vorratsbehälters 1 sind die als Schutzgitter 11 ausgebildeten Schutzeinrichtungen angeordnet, die während des Ausbringvorganges sich in der in Fig. 1 und 2 dargestellten Schutzposition befinden und somit den Zugang von außen zu den sich im unteren Bereich des Vorratsbehälters 1 angeordneten Rühr- 8 und Dosierelemente verhindern. Durch diese Schutzgitter 11 werden also die Rühr- 8 und/oder Dosierelemente abgeschirmt.

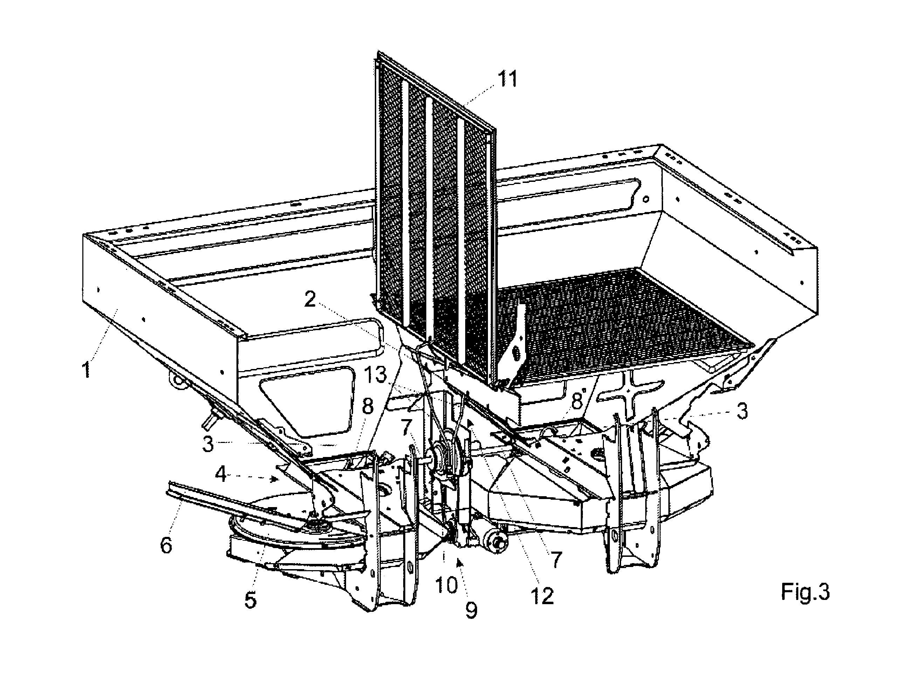

Zwischen dem jeweiligen Schutzgitter 11 und den Kupplungselementen 10 der Antriebsverbindung 9 sind Mittel angeordnet, die sicherstellen, dass die als Schutzgitter 11 ausgebildete Schutzeinrichtung, wenn sie aus ihrer Schutzposition gemäß Fig. 1 und 2 in die Öffnungsposition gemäß Fig. 3 und 4 bewegt wird, derart auf die Kupplungselemente der Antriebsverbindung einwirkt, dass die Rührwelle 7 und/oder die Rühr- oder Dosierelemente 8 durch trennen von der Antriebsvorrichtung still setzbar sind. Dies wird im Ausführungsbeispiel dadurch erreicht, dass das Kupplungselement 10, das zwischen der Antriebsverbindung 9 und der Rührwelle 7 angeordnet ist, ist als Schlingfederkupplung ausgebildet ist. An der

Schlingfederkupplung 10 angreifend sind die zwischen den beiden Schutzgittern 11 und der Schlingfederkupplung 10 angeordneten Verbindungsstangen 13 der Mittel 12 zugeordnet, die bei dem Öffnen eines der Schutzgitter 11 derart auf die Schlingfederkupplung 13 einwirken, dass der Antrieb zwischen der Antriebsverbindung 9 und der Rührwelle 7 getrennt wird, so dass die Rührwelle 7 stillgesetzt wird.

Anstelle einer Schlingfederkupplung 10 ist es jedoch auch in nicht dargestellter Weise möglich, Freiläufe einzusetzen und dann die zwischen dem Schutzgitter 11 und den Freiläufen anzuordnenden Stangen 13 so auszubilden, dass diese Stangen 13 so auf die Freiläufe einwirken, dass der Antrieb der Rührwelle 7 über die Antriebsverbindung 9 still gesetzt wird.

In einer anderen nicht dargestellten Ausgestaltung, ist es auch möglich, dass anstelle mechanischer Kupplungsmittel 10 elektrische Kupplungsmittel eingesetzt werden, um dann über elektrische Sensoren, Schalter, Kupplungsmittel etc. die Rühr- und/oder Dosierelemente 8 in geeigneter Weise stillsetzbar sind.

## Patentansprüche

1. Landwirtschaftliche Verteilmaschine mit einem Vorratsbehälter (1), in dem über eine zumindest eine Abschalteinrichtung aufweisende Antriebsvorrichtung (9) angetriebene Rühr- und/oder Dosierelemente angeordnet sind, wobei oberhalb der Rühr- (8) und/oder Dosierelemente (4) eine die Rühr- (8) und/oder Dosierelemente (4) abschirmende Schutzeinrichtung (11) dem Vorratsbehälter (1) zugeordnet ist, **dadurch gekennzeichnet, dass** die dem Vorratsbehälter ( 1 ) zugeordnete Schutzeinrichtung ( 11 ) mit Mitteln ( 12, 13 ) ausgestattet ist, die bei Entfernen der Schutzeinrichtung ( 11 ) aus ihrer Schutzposition auf die Antriebsvorrichtung ( 9 ) derart einwirken, dass die Rühr- und/oder Dosierelemente ( 4, 7, 8) durch Trennen, vorzugsweise durch Trennmittel ( 10 ) von der Antriebsvorrichtung ( 9 ) stillsetzbar sind.

2. Verteilmaschine nach Anspruch 1, **dadurch gekennzeichnet, dass** die Mittel eine der Antriebsvorrichtung ( 9 ) zugeordnete Kupplungsvorrichtung ( 10 ) aufweisen.

3. Verteilmaschine nach einem oder mehreren der vorstehenden Ansprüche, **dadurch gekennzeichnet, dass** die Mittel als elektrischer Sensor und/oder Schalter ausgebildet sind, dass der Sensor und/oder Schalter mit der Kupplungsvorrichtung über Übertragungsmittel verbunden ist.

4. Verteilmaschine nach Anspruch 1, und/oder 2, **dadurch gekennzeichnet, dass** die Mittel ( 12 ) als mechanische Übertragungsmittel ( 13 ) , die auf die Kupplungsvorrichtung ( 10 ) bei Entfernen der Schutzvorrichtung ( 11 ) aus der Schutzposition einwirken, ausgebildet sind.

5. Verteilmaschine nach Anspruch 2, **dadurch gekennzeichnet, dass** die Kupplungsvorrichtung als Schlingfederkupplung ( 10 ) ausgebildet ist.

6. Verteilmaschine nach Anspruch 2, **dadurch gekennzeichnet, dass** die Kupplungsvorrichtung als einen auf einen Freilauf einwirkendes Mittel ausgebildet ist.

## Claims

1. Agricultural distribution machine having a storage container (1), in which there are arranged agitating and/or metering elements which are driven via a drive arrangement (9) that has at least one shutdown device, wherein, above the agitating (8) and/or metering elements (4), a protective device (11) that shields the agitating (8) and/or metering elements (4) is assigned to the storage container (1), **characterized in that** the protective device (11) assigned to the storage container (1) is equipped with means (12, 13) which, when the protective device (11) is removed from its protective position, act on the drive arrangement (9) such that the agitating and/or metering elements (4, 7, 8) can be stopped by being disconnected from the drive arrangement (9), preferably by disconnecting means (10).

2. Distribution machine according to Claim 1, **characterized in that** the means have a coupling arrangement (10) assigned to the drive arrangement (9).

3. Distribution machine according to one or more of the preceding claims, **characterized in that** the means are in the form of an electric sensor and/or switch, **in that** the sensor and/or switch is connected to the coupling arrangement via transmission means.

4. Distribution machine according to Claim 1 and/or 2, **characterized in that** the means (12) are in the form of mechanical transmission means (13) which act on the coupling arrangement (10) when the protective arrangement (11) is removed from the protective position.

5. Distribution machine according to Claim 2, **characterized in that** the coupling arrangement is in the form of a wrap-spring coupling (10).

6. Distribution machine according to Claim 2, **characterized in that** the coupling arrangement is in the form of a means that acts on a freewheel.

## Revendications

1. Epandeur agricole comportant un réservoir (1) équipé d'éléments agitateurs et/ou de dosage entraînés par un dispositif d'entraînement (9) comportant une installation de débrayage,
* le réservoir (1) comportant une installation de protection (11) au-dessus des éléments agitateurs (8) et/ou de dosage (4) et qui protège les éléments agitateurs (8) et/ou les éléments de dosage (4), épandeur **caractérisé en ce que**
l'installation de protection (11) associée au réservoir (1) comporte des moyens (12, 13) qui, lorsque l'installation de protection (11) est dégagée de sa position de protection, agissent sur le dispositif d'entraînement (9) pour séparer les éléments agitateurs et/ou de dosage (4, 7, 8), de préférence par des moyens de séparation (10) par rapport au dispositif d'entraînement (9).

2. Epandeur selon la revendication 1,
**caractérisé en ce que**
les moyens comportent un dispositif d'embrayage (10) associé au dispositif d'entraînement (9).

3. Epandeur selon l'une ou plusieurs des revendications précédentes,
**caractérisé en ce que**
les moyens sont réalisés sous la forme de capteurs électriques et/ou de commutateurs, et
les capteurs et/ou les commutateurs sont reliés au dispositif d'embrayage par des moyens de transmission.

4. Epandeur selon la revendication 1 et/ou 2,
**caractérisé en ce que**
les moyens (12) sont des moyens de transmission mécanique (13) agissant sur le dispositif d'embrayage (10) lorsque le dispositif de protection (11) est enlevé de sa position de protection.

5. Epandeur selon la revendication 2,
**caractérisé en ce que**
le dispositif d'embrayage est un embrayage à ressort enveloppant (10).

6. Epandeur selon la revendication 2,
**caractérisé en ce que**
le dispositif d'embrayage est un moyen comportant une roue libre.
